# EUROPEAN PATENT APPLICATION

(11) **EP 4 745 163 A1**
(43) Date of publication of application: **20.05.2026**
(21) Application number: 24306935.8
(22) Date of filing: 19.11.2024
(51) Int. Cl.: C08B 30/12, A23L 29/212

(54) **THERMALLY MODIFIED STARCHES**

(71) Applicant: ROQUETTE FRERES, 62136 Lestrem (FR)
(72) Inventor: BOCK, Solène, 59130 Lambersart (FR); HASJIM, Jovin, 62400 Béthune (FR); PARCQ, Julien, 59000Lille (FR)
(74) Representative: Plasseraud IP

(57) **Abstract**

The invention relates to a method for preparing thermally modified starch, characterized in that it comprises the steps consisting of:
(i) preparing a starch milk having a solids content comprised between 30 and 40%, preferably between 35 and 37% by weight,
(ii) adding into the starch slurry both citric acid and sodium carbonate so as to obtain a pH between 6 and 9,
(iii) allowing stabilizing for 15 minutes to 2 hours,
(iv) filtering and drying to an equilibrium moisture content of between 9% and 15%, preferably about 12%,
(v) heating to a temperature between 120°C and 200°C, preferably between 150°C and 180°C, more preferably between 160°C and 170°C, for a period lasting from 0.5 to 6 hours of reaction time,
(vi) resuspending, correcting the pH, washing and again drying the thermally modified starches thus obtained.

## Description

The invention relates to a particular method for producing thermally modified starch, characterized in that the impregnation of the starch in slurry form is performed, prior to the heat treatment, with both citric acid and sodium carbonate to achieve a pH of between 6 and 9.

The invention also relates to a thermally modified starch produced via this particular route, having more shear and heat resistance, a fixed citrate content and a temperature at peak swelling of the starch granules that are all very entirely particular.

The invention also relates to a thermally modified starch produced via this particular route, having improved whiteness, expressed in L* (lightness or whiteness index) and in YI (yellowness index).

Such thermally modified starches then find a use as texturing and thickening agents in numerous food applications.

### FIELD OF THE INVENTION

Synthesized biochemically, a source of carbohydrates, starch is one of the most widespread organic materials in the plant kingdom, where it constitutes organisms' nutrient reserves.

Starches have always been used in the food industry, not only as a nutritional ingredient but also for their technical properties, as a thickening agent, binder, stabilizer or gelling agent.

For example, native starches are used in preparations requiring cooking. Corn starch, in particular, forms the basis of "powders for flan".

Since it is rich in amylose, it retrogrades and therefore gels strongly. This makes it possible to obtain firm flans after cooking and cooling. It is also suitable for custards.

However, these starches cannot be used in pastries intended to be frozen since, on defrosting, the phenomenon of syneresis, which is reflected in the expulsion of water, destroys the texture of the custard.

Thus, in its native state, starch has limited applicability due to syneresis, but also due to:
- its low resistance to shear stresses and to heat treatments,
- its limited processability, and
- its low solubility in common organic solvents.

Thus, in order to meet today's demanding technical requirements, the properties of starch have to be optimized by various methods known as "modification".

These main modifications therefore aim to adapt the starch to the technical constraints resulting from cooking, but also from freezing/thawing, from appertization or sterilization, and to make it compatible with modern food (microwaves, instant meals, "high temperatures", etc.).

Starch modification therefore aims to correct one or more of the abovementioned defects, thereby improving its versatility and meeting the needs of consumers.

Techniques for modifying starch have generally been classified into four categories: physical, chemical, enzymatic and genetic, the ultimate goal being to produce various derivatives with optimized physicochemical properties.

Chemical and physical modifications are most commonly implemented.

Chemical treatment consists of introducing functional groups into the starch, which alters its physicochemical properties in a noteworthy manner. Indeed, such modifications of granular native starches profoundly alter their behavior in terms of gelatinization, bonding and retrogradation.

Generally, these modifications are made by chemical derivatization, such as esterification, etherification, crosslinking or grafting.

However, chemical modifications are less sought-after by consumers in food applications (also for environmental reasons), even if some modifications are considered to be safe.

Various physical modifications are thus proposed, for example:
- heat moisture treatment (HMT), consisting of treating the starch at controlled humidity levels (22-27%) and at high temperature, for 16 hours, in order to alter the structure and physicochemical properties of the starch;
- annealing, consisting of treating the starch in an excess of water at temperatures below the gelatinization temperature, in order to come close to the glass transition temperature;
- high-pressure processing (HPP), by means of which the amorphous regions of the starch granule are hydrated, leading to a distortion of the crystalline parts of the granule and promoting the accessibility of said crystalline regions to water;
- glow discharge plasma treatment, which generates, at ambient temperature, high-energy electrons and other highly active species. Applied to the starch, these active species excite the chemical groups in the starch and cause significant crosslinking of the macromolecules;
- osmotic pressure treatment (OPT), carried out in the presence of solutions with a high content of salts. The starch is suspended in sodium sulfate in order to produce a uniform suspension.

The starch goes from type B to type A after treatment, thereby acquiring a gelatinization temperature which increases significantly;
- "thermal inhibition" treatment. Generally, thermal inhibition means dehydrating a starch until it reaches the anhydrous or substantially anhydrous state (i.e. < 1% humidity), then a heat treatment at more than 100°C for a sufficient period of time to "inhibit" the starch, in this case to afford it properties of crosslinked starches. Moreover, it is necessary to place the starch under pH conditions which are at least neutral to preferentially alkaline, before carrying out the step of forced dehydration.

An alternative to "thermal inhibition" treatment has been proposed in the solvent phase and consists of heating a non-pre-gelatinized granular starch in an alcohol-based medium in the presence of a base and salts at a temperature of 120° to 200°C for 5 minutes to 2 hours.

Regardless, the thermal inhibition process thus leads to obtaining a starch paste having properties of increased resistance to viscosity breakdown, and a non-cohesive texture.

The technical field to which the invention belongs is that of thermal inhibition treatment of starch without an aqueous-alcoholic solvent.

In this particular technical field, mention may more particularly be made of US 6,221,420, which describes a thermally inhibited starch obtained by dehydration then heat treatment.

The main steps are:
- dehydration of the starch to a water content of less than 1%, carried out at a temperature comprised between 100 and 125 °C, then
- heat treatment of the dry starch thus obtained, at approximately 140°C, in a reactive fluidized bed, for a duration of the order of 20 hours.

Preferentially, before the step of dehydrating the starch, it is recommended to perform a step of alkalinization of the starch, making it possible to bring the pH of the starch suspension to a value comprised between 7 and 10, preferably comprised between 8 and 10.

At this stage, before the step of dehydration which precedes the inhibition step, the water content of the starch (as demonstrated by way of examples) is then comprised between 8 and 10%.

US 2001/0017133 describes a similar method, wherein the starch is also dehydrated below 125°C before the inhibition process is begun (at a temperature of more than 100°C, preferentially of between 120 and 180°C, more preferentially of between 140 and 160°C) for a duration of up to 20 hours, preferentially of between 3.5 hours and 4.5 hours.

Before the dehydration step, the conventional alkalinization step leads to a starch suspension having a pH value comprised between 7.5 and 11.2, preferably comprised between 8 and 9.5, and a water content comprised between 2 and 15%.

A variant was proposed in patent application WO 2014/042537, which variant relates to heating an alkaline starch at temperatures of between 140 and 190°C while ensuring that the inhibition method is initiated and carried out in the presence of a sufficient amount of water, that is more than 1% water.

In other words, this method recommends the thermal inhibition of a starch which has been alkalinized beforehand without carrying out a dehydration step.

The starch preparation or the starch is thus brought to a pH of between 9.1 and 11.2, preferentially to a value on the order of 10, and the moisture is adjusted to between 2 and 22%, preferentially between 5 and 10%.

The thermal inhibition is subsequently carried out directly on this powder or this starch, at a temperature comprised between 140 and 190 °C, preferentially between 140 and 180 °C, for a duration of 30 minutes.

Another alternative has been proposed, contrarily by lowering the pH of the treated starch before thermal inhibition. Indeed, a major drawback is due to the fact that high pH levels tend to increase the browning of the starch during the heating step.

Thus, in patent application WO 2020/139997, a step is described for preparing the starch which successively consists of:
- preparing a starch milk,
- bringing the starch milk thus prepared to a pH of between 5 and 6.5, by neutralization if necessary,
- adding an acidic buffer, and
- adjusting the pH.

It is only then the actual heat treatment step is carried out, comprising a dehydration step and a thermal inhibition step.

In this patent application, it is essential to first bring the starch milk to a pH value between 5 and 6.5. Either the starch already has this pH value, considered to be its natural pH value, or a step of "neutralization" (by adding acid or base) to reach this pH range is carried out. This step can take up to 24 hours.

Then a pH buffer of citrate or citric acid is added to bring the pH of the starch milk to a pH value of between 4 and 6. This step may take up to additional 24 hours.

Finally, in order to manufacture a thermally inhibited starch, it is taught in this patent application to carry out the dehydration and the thermal inhibition of the starch milk thus treated. This step can take up to 4 hours of reaction time.

Finally, it is established that this method makes it possible to obtain thermally inhibited starches that are whiter and that have improved taste compared to thermally inhibited starches prepared by conventional route, that is after alkaline impregnation.

Yet there is still room for improvement in this method for preparing thermally inhibited starches. Indeed, it has the disadvantage, from the point of view of its implemented method, of having to carry out the impregnation of the starch milk in an acidic medium only after having finely controlled the initial pH of the starch.

Then, as will be demonstrated below, a treatment of this type leads to the production of thermally inhibited starches having a high fixed citrate content, on the order of more than 0.15%, reflecting a significant degree of functionalization.

From the foregoing, there is therefore a need to have an original method for inhibiting starch, making it possible to further reduce the reaction time, by carrying out the impregnation on the starch slurry with both citric acid and sodium carbonate, and by reducing the actual thermal inhibition time, so as to lower the citrate content to values much lower than 0.15%, reflecting a sufficient degree of functionalization for the targeted applications.

### DESCRIPTION OF THE INVENTION

Thus, the invention relates to a method for producing thermally modified starch, comprising the steps of:
- preparing a starch milk having a solids content comprised between 30 and 40%, preferably between 35 and 37% by weight,
- adding into the starch slurry both citric acid and sodium carbonate so as to obtain a pH between 6 and 9,
- allowing stabilizing for 15 minutes to 2 hours,
- filtering and drying to an equilibrium moisture content of between 9% and 15%, preferably about 12%,
- heating to a temperature between 120°C and 200°C, preferably between 150°C and 180°C, more preferably between 160°C and 170°C, for a period lasting from 0.5 to 6 hours of reaction time,
- resuspending, correcting the pH, washing and again drying the thermally modified starches thus obtained.

The starch to be used in the method of the invention may be of any origin, for example corn, waxy corn, high-amylose corn, wheat, waxy wheat, high-amylose wheat, pea, faba bean, mung bean, potato, waxy potato, high-amylose potato, tapioca, waxy tapioca, rice, waxy rice, high-amylose rice, barley, waxy barley, high-amylose barley, sorghum, waxy sorghum, sweet potato, waxy sweet potato, millet, sago, arrowroot, quinoa, amaranth, lotus root, buckwheat, taken alone or in combination.

Preferably, corn starch, more particularly waxy corn starch (with a high amylopectin content, as will be exemplified below.

The method in accordance with the invention first of all requires preparing a starch milk having a solids content of between 30 and 40%, preferably between 35 and 37% by weight. As will be demonstrated by way of examples below, the solids content is set to 36.5% by weight.

The second step of the method according to the invention consists of adding into the starch slurry both citric acid and sodium carbonate so as to obtain a pH between 6 and 9.

In a first embodiment of the invention, the adding into the starch slurry of both citric acid and sodium carbonate is performed by adding a citric acid solution into the slurry, followed by the adjustment of the pH to 6 or 9 using a sodium carbonate solution, as will be exemplified below.

In a second embodiment of the invention, the pH of the slurry is adjusted to 8 or 11 using sodium carbonate, followed by the adjustment of the pH to 6 or 9 using a citric acid solution, as will be exemplified below.

The third step of the method according to the invention consists of leaving to stabilize for 15 minutes to 2 hours and measure the pH and conductivity of the suspension.

The fourth step of the method according to the invention consists of filtering and drying to an equilibrium moisture content of between 9% and 15%, preferably about 12%.

The fifth step of the method according to the invention consists of the heat treatment carried out at a temperature between 120°C and 200°C, preferably between 150°C and 180°C, more preferably between 160°C and 170°C, for a period lasting from 0.5 to 6 hours of reaction time.

This kinetics makes it possible to vary the degree of functionalization of the thermally modified starches thus prepared (the more functionalized the starches are, the stronger the conditions of use, that are acidic pH, high shear, and high temperature).

Heating can be carried out in a ventilated oven, in a pilot or industrial apparatus of the Turbodryer, fluidized bed reactor, or paddle roaster type.

The last step of the method according to the invention consists of resuspending, correcting the pH, washing and again drying the thermally modified starches thus obtained.

Thus, the invention relates also to a thermally modified starch produced via the method of the invention, characterized in that it has a fixed citrate content of between 0.01% and 0.16%, preferably between 0.01% and 0.12%, and more preferably between 0.01 % and 0.08%.

Advantageously, the thermally modified starch according to the present invention has a viscosity drop of less than 400 cP, preferably less than 200 cP, more preferably no viscosity drop, analyzed using RVA at 4.89% starch content in a citrate solution (pH ~3) with a heating program from 50°C to 92°C.

The thermally modified starch according to the present invention has a temperature at peak swelling of the starch granules (or peak temperature), analyzed using RVA at 4.89% starch content in a citrate buffer (pH ~4) with a heating program from 30°C to 140°C, greater than 100°C, preferably between 110 and 140°C.

The thermally modified starch according to the present invention has a difference between peak viscosity and final viscosity of less than 900 cP, preferably less than 600 cP, more preferably less than 300 cP, analyzed using RVA at 4.89% starch content in a citrate buffer (pH ~4) with a heating program from 30°C to 140°C.

More particularly, this thermally modified starch has a coloring expressed as the L* value of between 75 and 92, preferably between 80 and 90, and/or in the YI value of between 10 and 50, preferably between 20 and 45.

The assaying of the citrates of the thermally modified starches of the invention is carried out by a high-performance anion-exchange chromatography (HPAEC) on the washed and hydrolyzed product, according to the conditions as presented below.

The assaying of the free citrates makes it possible to validate the use of said thermally starches in "Clean Label" applications, and that of fixed citrates makes it possible to determine the degree of functionalization expressed by the products of the thermal reaction via the acid route on the starches.

As for the assaying of the fixed citrates, obtained after washing and hydrolysis, the thermally modified starches in accordance with the invention have a fixed citrate content of between 0.01% and 0.16%, preferably between 0.01% and 0.12%, and more preferably between 0.01 % and 0.08%.

The viscosity measurements of the thermally modified starches according to the invention are carried out on RVA devices and make it possible to show the resistance of the starch granules to fully swell at the peak viscosity (higher peak temperature) and to be hydrolyzed by acids (lower or no viscosity drop or smaller difference between peak and final viscosities).

This will result in a viscosity drop of less than 400 cP, preferably less than 200 cP, more preferably no viscosity drop, analyzed using RVA at 4.89% starch content in a citrate solution (pH ~3) with a heating program from 50°C to 92°C.

This will also result in a temperature at peak swelling of the starch granules (or peak temperature), analyzed using RVA at 4.89% starch content in a citrate buffer (pH ~4) with a heating program from 30°C to 140°C, greater than 100°C, or even greater than 110°C. Consequently, the difference between peak viscosity and final viscosity is less than 900 cP, preferably less than 600 cP, more preferably less than 300 cP.

The thermally modified starches according to the invention are finally characterized by a coloring equivalent to that of native starches which served as a basis for their manufacture.

This is reflected by a value in the L* value of between 75 and 92, preferably between 80 and 90, more preferably between 84 and 88 and/or in the YI value of between 10 and 50, preferably between 20 and 45.

The thermally modified starches thus obtained will advantageously be used, depending on their respective properties, as a thickening agent or texturizing agent in food applications.

The invention will be better understood with the aid of the following examples, which are intended to be illustrative and non-limiting.

### Description of the Figures

**Figure 1****.** pH evolution of starch samples during thermal modification and after washing.
**Figure 2****.** Conductivity of starch samples during thermal modification and after washing.
**Figure 3****.** Lightness (top) and yellowness index (bottom) of starch samples after thermal modification and after washing.
**Figure 4****.** Pasting curves in citric acid solution (pH ~3) with heating up to 92°C of starch sample impregnated at pH 6, using citric acid followed by NaOH after thermal modification for 0, 0.75, 1, 1.5, and 2h and after washing.
**Figure 5****.** Pasting curves in citric acid solution (pH ~3) with heating up to 92°C of starch sample impregnated at pH 6, using citric acid followed by sodium carbonate after thermal modification for 0, 0.75, 1, 1.5, and 2h and after washing.
**Figure 6****.** Pasting curves in citric acid solution (pH ~3) with heating up to 92°C of starch sample impregnated at pH 8, using citric acid followed by NaOH after thermal modification for 0, 0.75, 1, 1.5, and 2h and after washing.
**Figure 7****.** Pasting curves in citric acid solution (pH ~3) with heating up to 92°C of starch sample impregnated at pH 8, using citric acid followed by sodium carbonate after thermal modification for 0, 0.75, 1, 1.5, and 2h and after washing.
**Figure 8****.** Peak viscosity (top), viscosity at the end of heating (middle), and viscosity drop (bottom) during heating in citric acid solution (pH ~3) up to 92°C of starch samples after thermal modification and after washing.
**Figure 9****.** Pasting curves in citrate buffer (pH 4) with heating up to 140°C of starch sample impregnated at pH 6, using citric acid followed by NaOH after thermal modification for 0, 0.75, 1, 1.5, and 2h and after washing.
**Figure 10****.** Pasting curves in citrate buffer (pH 4) with heating up to 140°C of starch sample impregnated at pH 6, using citric acid followed by sodium carbonate after thermal modification for 0, 0.75, 1, 1.5, and 2h and after washing.
**Figure 11****.** Pasting curves in citrate buffer (pH 4) with heating up to 140°C of starch sample impregnated at pH 8, using citric acid followed by NaOH after thermal modification for 0, 0.75, 1, 1.5, and 2h and after washing.
**Figure 12****.** Pasting curves in citrate buffer (pH 4) with heating up to 140°C of starch sample impregnated at pH 8, using citric acid followed by sodium carbonate after thermal modification for 0, 0.75, 1, 1.5, and 2h and after washing.
**Figure 13****.** Peak viscosity (top left), final viscosity (top right), difference between peak and final viscosity (middle left), peak temperature (middle right), and peak time (bottom) during heating in citrate buffer (pH 4) up to 140°C of starch samples after thermal modification and after washing.
**Figure 14****.** pH (left) and conductivity (right) of starch samples during thermal modification.
**Figure 15****.** Lightness (top) and yellowness index (bottom) of starch samples after thermal modification and after washing.
**Figure 16****.** Correlation of citric acid added during impregnation with free citrate in starch sample before thermal modification and fixed citrate after thermal modification.
**Figure 17****.** Pasting curves in citric acid solution (pH ~3) with heating up to 92°C of starch sample impregnated at pH 8 using sodium carbonate followed by adjustment to pH 6 using citric acid, after thermal modification for 0, 0.75, 1, 1.5, and 2h and after washing.
**Figure 18****.** Pasting curves in citric acid solution (pH ~3) with heating up to 92°C of starch sample impregnated at pH 11 using sodium carbonate followed by adjustment to pH 6 using citric acid, after thermal modification for 0, 0.75, 1, 1.5, and 2h and after washing.
**Figure 19****.** Pasting curves in citric acid solution (pH ~3) with heating up to 92°C of starch sample impregnated at pH 11 using sodium carbonate followed by adjustment to pH 8 using citric acid, after thermal modification for 0, 0.75, 1, 1.5, and 2h and after washing.
**Figure 20****.** Peak viscosity (top), viscosity at the end of heating (middle), and viscosity drop (bottom) during heating in citric acid solution (pH ~3) up to 92°C of starch samples after thermal modification and after washing.
**Figure 21****.** Pasting curves in citrate buffer (pH 4) with heating up to 140°C of starch sample impregnated at pH 8 using sodium carbonate followed by adjustment to pH 6 using citric acid, after thermal modification for 0, 0.75, 1, 1.5, and 2h and after washing.
**Figure 22****.** Pasting curves in citrate buffer (pH 4) with heating up to 140°C of starch sample impregnated at pH 11 using sodium carbonate followed by adjustment to pH 6 using citric acid, after thermal modification for 0, 0.75, 1, 1.5, and 2h and after washing.
**Figure 23****.** Pasting curves in citrate buffer (pH 4) with heating up to 140°C of starch sample impregnated at pH 11 using sodium carbonate followed by adjustment to pH 8 using citric acid, after thermal modification for 0, 0.75, 1, 1.5, and 2h and after washing.
**Figure 24****.** Peak viscosity (top left), final viscosity (top right), difference between peak and final viscosity (middle left), peak temperature (middle right), and peak time (bottom) during heating in citrate buffer (pH 4) up to 140°C of starch samples after thermal modification and after washing.

### Materials and methods

### Measurement of conductivity and pH

### Conductivity

The method implemented herein is adapted from the European Pharmacopoeia - current official edition - Conductivity (§ 2.2.38).

KNICK 703 electronic conductivity meter, equipped with a measuring cell that had been verified according to the procedure described in its instruction manual was used to measure the conductivity of starch slurry.

A solution containing 20 g of sample in powder form and 80 g of demineralized water having a resistivity of greater than 500,000 ohms.cm was prepared for the measurement.

The measurement is carried out at 20°C using the conductivity meter, referring to the procedure indicated in the user manual of the instrument.

The values are expressed in microSiemens/cm (µS/cm) or milliSiemens/cm (mS/cm).

### pH

The method implemented here is adapted from the European Pharmacopoeia - current official edition - pH (§ 2.2.3).

A suspension of the sample to be analyzed at 20% (w/w) was prepared, and the pH value was determined using a laboratory pH meter, referring to the procedure indicated in the user manual of the instrument. The pH was expressed to within 0.01 unit.

### Pasting properties in citric acid solution (pH ~3) with heating up to 92°C

The acid stability of starch was determined based on its pasting profile in an acidic solution obtained using a Rapid Visco Analyzer (RVA 4500, Perten).

Starch was mixed with citric acid solution (pH ~3) to obtain a slurry with 4.89% starch content in a canister.

The citric acid solution contained 2.1% w/w citric acid, 0.76% w/w NaCl, and 0.277% w/w NaOH.

The slurry was heated isothermally at 50°C for 1 min, followed by heating to 92°C at a rate of 10.5°C/min (a total of 4 min), isothermal heating at 92°C for 12 min, cooling to 50°C at a rate of 14°C/min (a total of 3 min), and finally isothermal heating at 50°C for 15 sec.

For better mixing, the stirring was started at 100 rpm, which was increased to 500 rpm and 960 rpm after 10 and 20 sec, respectively, and then decreased to 160 rpm after 30 sec, where it stayed constant until the end of the test. The heating program is summarized in Table 1.

**Table 1. RVA 4500 heating program in citric acid solution (pH ~3).**

| Time | Temperature (°C) | Stirring (rpm) |
|---|---|---|
| 00:00:00 | 50 | 100 |
| 00:00:10 | 50 | 500 |
| 00:00:20 | 50 | 960 |
| 00:00:30 | 50 | 160 |
| 00:01:00 | 50 | 160 |
| 00:05:00 | 92 | 160 |
| 00:17:00 | 92 | 160 |
| 00:20:00 | 50 | 160 |
| 00:20:15 | 50 | 160 |

From the RVA pasting profile in citric acid solution with heating up to 92°C, two parameters were identified from the pasting curve.

Peak viscosity is the highest viscosity between 4 and 6 min.

If no peak was observed between 4 and 6 min, the viscosity at 6 min was used as the peak viscosity.

The viscosity at the end of heating is the viscosity after heating at 92°C for 12 min (or at the 17^{th} min of the analysis). Viscosity drop, which is the difference between peak viscosity and the viscosity at the end of heating, was also calculated.

The increase in acid stability is identified as a smaller viscosity drop, or sometimes a negative viscosity drop if there was no peak viscosity.

### Pasting properties in citrate buffer (pH 4) with heating up to 140°C

The acid stability of starch at above 100°C was also performed using another Rapid Visco Analyzer (RVA 4800, Perten).

Starch was mixed with a citrate buffer (pH 4) to obtain a slurry with 4.89% starch content in a canister.

The citrate buffer was prepared by mixing 12.78 g citric acid and 9.34 g sodium citrate in 800 mL distilled water.

The sample was heated isothermally at 30°C for 1 min, followed by heating to 140°C at a rate of 10°C/min (a total of 11 min), isothermal heating at 140°C for 5 min, cooling to 30°C at a rate of 10°C/min (a total of 11 min), and finally isothermal heating at 30°C for 10 min.

For better mixing, the stirring was started at 100 rpm, which was increased to 500 rpm and 960 rpm after 10 and 20 sec, respectively, and then decreased to 160 rpm after 30 sec, where it stayed constant until the end of the test. The heating program is summarized in Table 2.

**Table 2. RVA 4800 heating program in citrate buffer (pH 4).**

| Time | Temperature (°C) | Stirring (rpm) |
|---|---|---|
| 00:00:00 | 30 | 100 |
| 00:00:10 | 30 | 500 |
| 00:00:20 | 30 | 960 |
| 00:00:30 | 30 | 160 |
| 00:01:00 | 30 | 160 |
| 00:12:00 | 140 | 160 |
| 00:17:00 | 140 | 160 |
| 00:28:00 | 30 | 160 |
| 00:38:00 | 30 | 160 |

From the RVA pasting profile in citrate buffer with heating up to 140°C, four parameters were identified from the pasting curve.

Peak viscosity is the highest viscosity between 5 and 20 min, and final viscosity is the viscosity at the end of the analysis.

Peak temperature and time are the temperature and the time where the peak viscosity appears, respectively.

The difference between peak and final viscosities were also calculated.

When peak viscosity is higher than the final viscosity, the difference is positive. On the other hand, the value is negative when the final viscosity is higher.

### The amounts of free and fixed citrate

The amount of citrate fixed onto the starch molecules after thermal modification was quantified from the samples that had been washed to remove free unreacted citrate.

For the washing, each sample (20 g) was mixed with 200 mL reverse osmosis water for 20 min and filtered. The mixing and filtration were repeated one more time, and then the starch cake was rinsed with another 200 mL reverse osmosis water.

The starch cake was dried in an oven overnight and ground into fine powder. In a 10-mL volumetric flask, the washed and dried starch sample (exactly 1 g) was mixed with 2 N HCl to the mark and transferred to a hydrolysis tube, which was then placed in a Reacti-Therm (Thermo Scientific) at 100°C for 2 h. This step hydrolyzed the citrate group from the starch molecules as well as the starch molecules into glucose.

After cooling, 0.1 mL aliquot was mixed with 0.5 mL internal standard (400 mg/L trifluoroacetic acid solution) and adjusted to 20 mL using water, which was then filtered.

The amount of citric acid (or sodium citrate) in the filtrate was analyzed using a high-performance anion-exchange chromatography (HPAEC, Dionex ICS-2100 system, Thermo Scientific) with a conductometric detector.

The system was equipped with an autosampler to maintain the samples at 10°C (Dionex AS-AP), an Anion Self-Regenerating Suppressor (AERS 500-ultra), and a IonPacAS11-HC 4×250 mm column with AG11-HC 4×50 mm pre-column.

Each sample was passed through a 0.45-µm syringe filter. The injection volume was 25 µL, the column was maintained at 36°C, the analysis time was 77 min, and the Anion Self-Regenerating Suppressor current was set at 193 mA.

HPLC grade water was used as eluent, and EGC-KOH Cartridge was used to control the KOH concentration. The elution program was summarized in Table 3.

**Table 3. Elution program of HPAEC for citrate detection.**

| Time (min) | Flow rate (mL/min) | KOH |
|---|---|---|
| 0 | 1.3 | 1.5 |
| 15 | 1.3 | 1.5 |
| 28 | 1.3 | 1.2 |
| 48 | 1.3 | 28 |
| 60 | 1.3 | 40 |
| 60.1 | 1.3 | 60 |
| 67 | 1.3 | 60 |
| 67.1 | 1.3 | 1.5 |
| 77 | 1.3 | 1.5 |

The calibration was performed using six concentrations of sodium citrate solutions containing the same amount of internal standard.

These solutions were prepared as follows.

Sodium citrate tribasic dihydrate (between 10 and 250 mg) was dissolved in water to 500 mL. The prepared sodium citrate solution was mixed with an equal volume of the internal standard solution (400 mg/L trifluoroacetic acid solution) and then diluted 20 times using 1 mM NaOH. The ratios of peak heights between the citrate ions and the internal standard were used to draw the calibration curve.

The amount of free citrate retained in the starch before thermal modification was quantified directly from the dry starch after impregnation step.

Starch sample (100 mg dry weight) was mixed with 0.5 mL internal standard (400 mg/L trifluoroacetic acid solution), and the mixture was adjusted with water to 20 mL and then filtered. The citric acid or citrate ions in the filtrate was analyzed using the HPAEC system the same way as the fixed citrate. % (free or fixed) citrate = weight of citrate ions detected/weight of dry sample × 100%

### Color measurement

The colorimetric measurement is based on the opposite-color theory, which specifies that the responses of the cones (the cells of the retina of the human eye responsible for seeing color) to the colors red, green and blue are recombined into opposite signals "black-white", "red-green" and "yellow-blue" when transmitted to the brain by the optic nerve.

This measurement is based on the color scales widely used in the food and polymer industries, called the CIELAB L*, a*, b* scales.

The L*, a* and b* scales are defined as follows:
- axis "L*" (lightness): 0 corresponds to black, 100 corresponds to white
- axis "a*" (red-green): the positive values are assigned to red, the negative values are assigned to green; 0 is neutral
- axis "b" (yellow-blue): the positive values are assigned to yellow, the negative values are assigned to green; 0 is neutral.

The index "L*" therefore has a value of between 0 and 100, while the indices "b*" and "a*" have no numerical limitations. The measurement apparatus is conventionally a Colorflex EZ spectrocolorimeter, following the manufacturer's specifications (version of the manual 1.2 of August 2013 for firmware CFEZ version 1.07 and above - see page 17 and 38).

The measurement is carried out in a 64 mm glass sample cup into which the sample is inserted so as to fill the glass cup halfway in order to have sufficient material to cover the surface in contact with the rays (for uniformity of measurement).

YI (yellowness index) is a number calculated from spectrophotometric data, which describes the change in color of a test sample of "clear or white" to "yellow", which is well known to the person skilled in the art.

### Examples

### Example 1: Preparation of thermally modified starches from waxy corn starch - Adding of citric acid to a starch slurry, then pH adjustment to 6 or 8 with carbonate solution

### Impregnation of starch

A starch slurry at 36.5% solid content was prepared using waxy maize starch and demineralized water.

A citric acid in solution was added into the slurry to obtain 0.72% w/w dry citric acid based on the dry starch weight, and the mixture was stirred for 15 to 30 min.

The pH was then adjusted to 6 or 8 using 10% sodium carbonate solution, and allowed to stabilize under agitation for 15 to 30 min. For comparison, the pH of citric acid-starch mixture was also adjusted to pH 6 or 8 using 3.5% NaOH solution.

The impregnated starch was recovered through filtration, and the starch cake was further dried using a fluidized bed dryer (TG200, Retsch) at 60°C until the moisture was about 12% and ground to fine particles.

The pH and the conductivity of impregnated starch after drying were measured at 20% solid content in demineralized water to measure the amount of retained salt/buffer in the starch sample.

### Thermal modification of impregnated starch

Impregnated starch (35 to 40 g) with about 12% moisture content was placed evenly on an aluminum pan and then heated in a ventilated oven at 170°C for 0 h, 0.75 h, 1 h, 1.5 h, and 2 h.

The pH and the conductivity of thermally modified starch were measured at 20% solid content in demineralized water to monitor the evolution of salt/buffer quantity during thermal modification.

The changes in the color of starch powder were also analyzed.

The pH and the conductivity of the native waxy maize starch (before impregnation) at 20% starch content in demineralized water were 5.31 and 157 µS/cm, respectively.

### Washing of thermally modified starch

Thermally modified starch was mixed with demineralized water to create a slurry with 36% solid content. The starch was recovered by filtration, and the starch cake was further dried using a fluidized bed dryer (TG200, Retsch) at 60°C until the moisture was between 12 and 14% and ground to fine particles. The pH and the conductivity of the washed starch were measured at 20% solid content in demineralized water to quantify the residual salt/buffer. The color of starch powder after washing was also analyzed.

### pH and conductivity during thermal modification and after washing

About 80% of the salt/buffer during the impregnation step remained in the starch after drying before thermal modification, based on dry starch weight (Table 4).

The pH at 6 obtained from citric acid followed by NaOH did not change much after drying, but the pH at 8 obtained from citric acid followed by sodium carbonate changed to pH almost 10 after drying.

**Table 4. pH and conductivity of starch sample during impregnation and before thermal modification.**

| | During impregnation (36.5% starch slurry) | | Before thermal modification (measured at 20% starch slurry) | |
|---|---|---|---|---|
| Sample | pH | Conductivity (µS/cm) | pH | Conductivity (µS/cm) |
| Citric acid + NaOH | 6.01 | 1780 | 6.11 | 776 |
| Citric acid + sodium carbonate | 8.00 | 3490 | 9.91 | 1520 |

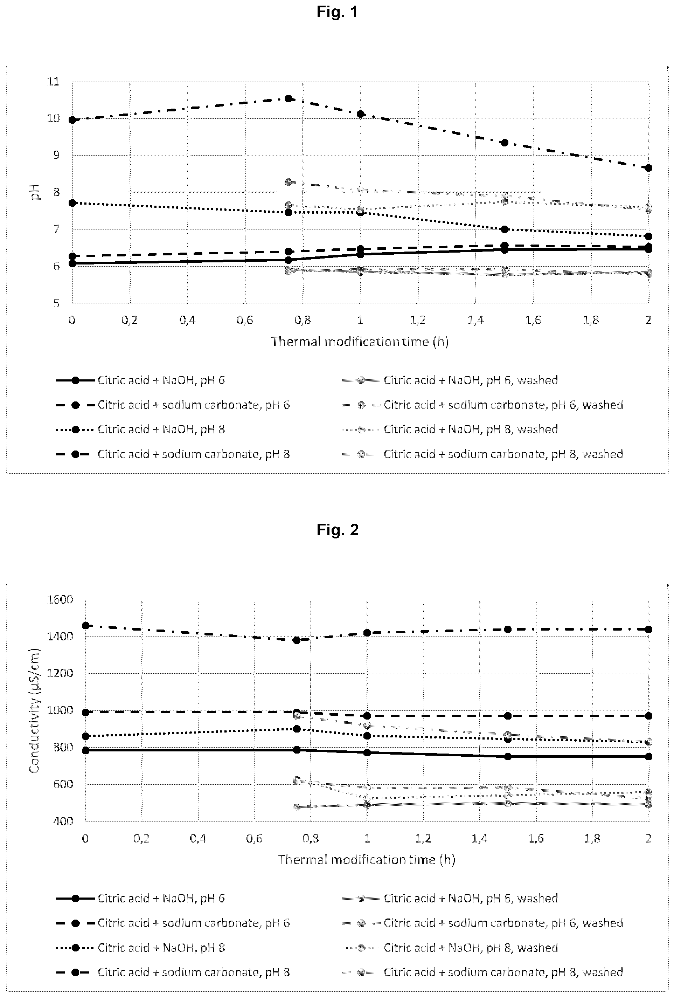

The starch samples impregnated at pH 6 (both citric acid followed by NaOH and citric acid followed by sodium carbonate) showed a slight increase in the pH during the course of thermal modification, while that impregnated at pH 8 using citric acid followed by NaOH showed a decrease in the pH (Figure 1). The final pH of these starch samples after 2h thermal modification were between 6.5 and 7.0.

On the other hand, the pH of the sample impregnated at pH 8 using citric acid followed by sodium carbonate was around 10.0 and 10.5 at the beginning of thermal modification and after 45-min thermal modification, respectively, and then decreased to around 8.7 after 2h thermal modification, which was higher than the pH during the impregnation step.

Except those impregnated at pH 8 using citric acid and NaOH, the washing step reduced the pH of all starch samples, mainly due to the removal of the buffer.

The conductivity of starch samples impregnated with citric acid followed by sodium carbonate was higher than their counterparts impregnated with citric acid followed by NaOH although the impregnation pH was the same (Figure 2).

This could be due to the fact that sodium carbonate is a weak base while NaOH is a strong base, and thus a higher concentration of sodium carbonate was needed to reach the same pH.

The conductivity did not change much during the course of thermal modification. The washing step reduced the conductivity of all starch samples, mainly due to the removal of the salt/buffer.

### Color of starch powder after thermal modification and after washing.

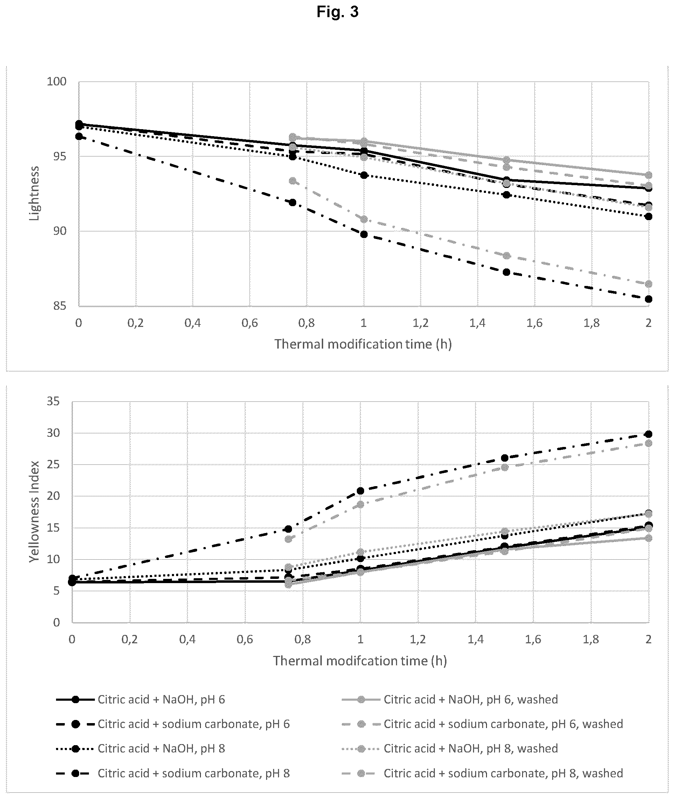

The lightness and the yellowness index of starch samples decreased and increased, respectively, with thermal modification time (Figure 3).

The differences between the two samples impregnated at pH 6 were small. The changes observed during thermal modification from the samples impregnated at pH 8 were larger than those at pH 6 with the sample impregnated at pH 8 using citric acid followed by sodium carbonate exhibiting the largest changes in both lightness and yellowness index.

The washing step slightly improved the lightness of all starch samples and reduced the yellowness of the samples impregnated at pH 8 using citric acid followed by sodium carbonate. However, the yellowness of the other samples did not change much after the washing step.

### The amounts of free and fixed citrate

Except the sample impregnated at pH 8 using citric acid followed by sodium carbonate, the other samples contained about 0.39 to 0.41% free citrate before thermal modification (Table 5). Whereas the sample impregnated at pH 8 using citric acid followed by sodium carbonate had lower free citrate content, at 0.34%, before thermal modification.

The amount of citrate fixed onto the starch molecules after 2h thermal modification was less than 30% of the amount of free citrate retained in the starch before thermal modification.

The amount of fixed citrate after 2h thermal modification was higher at pH 6 than at higher pH. The fixed citrate was the lowest for the sample impregnated at pH 8 using citric acid followed by sodium carbonate (or pH 10 before thermal modification).

**Table 5. Amounts of free and fixed citrate in starch sample before and after thermal modification, respectively, in Example 1.**

| Sample | Impregnation pH | pH before thermal modification | Free citrate before thermal modification* | Fixed citrate after 2h thermal modification* |
|---|---|---|---|---|
| Citric acid followed by NaOH | 6 | 6 | 0.40% | 0.11% |
| Citric acid followed by sodium carbonate | 6 | 6 | 0.41% | 0.12% |
| Citric acid followed by NaOH | 8 | 8 | 0.39% | 0.06% |
| Citric acid followed by sodium carbonate | 8 | 10 | 0.34% | 0.02% |

| | | | | |
|---|---|---|---|---|
| Weight percentage of dry free or fixed citrate to dry starch. | | | | |

### Pasting properties in citric acid solution (pH ~3) with heating up to 92°C

The pasting properties of thermally modified starches before and after washing were analyzed in citric acid solution (pH ~3) to evaluate the changes in their acid resistance after thermal modification and after washing.

The native starch showed no or little acid resistance as the viscosity rapidly decreased during heating at 92°C, resulting in a large viscosity drop.

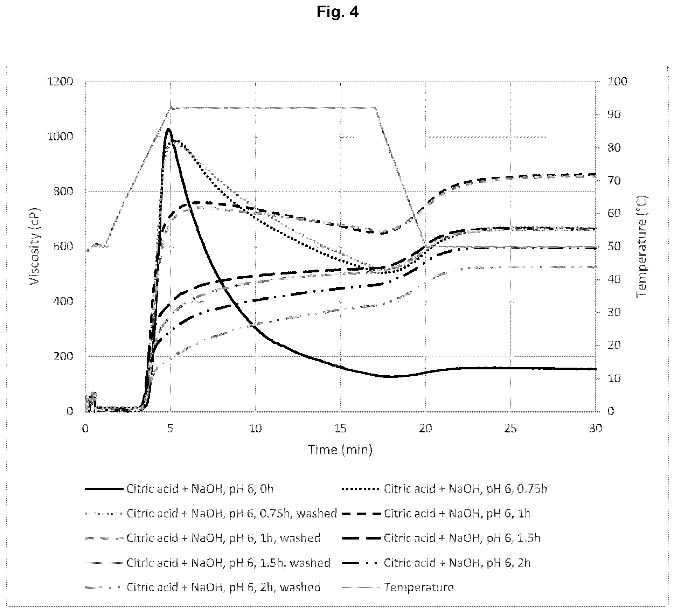

The peak viscosity decreased, while the viscosity at the end of heating increased with thermal modification time, and thus a smaller viscosity drop was obtained (Figures 4-7).

After 1.5h thermal modification, the peak viscosity was not apparent due to the inability of starch granules to swell during heating, giving a negative viscosity drop. The results indicate that all thermally modified starch samples had improved acid and heat resistance, comparing with the native starch.

The washing slightly decreased the overall viscosity of thermally modified starch without changing too much the shape of the pasting curve.

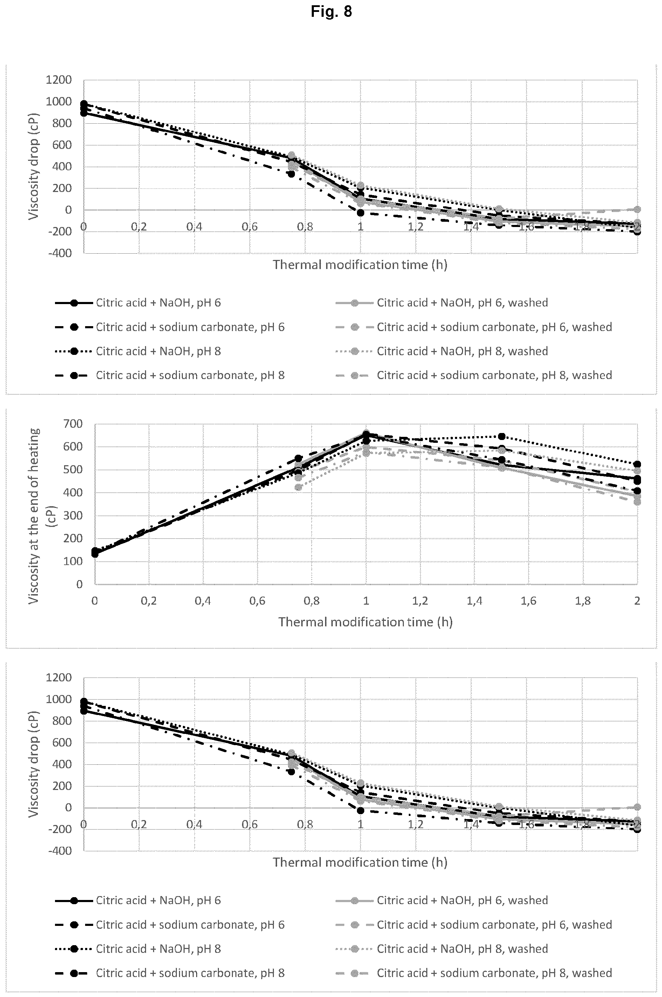

The evolutions of the peak viscosity, the viscosity at the end of heating, and the viscosity drop from the RVA heating in citric acid solution (pH ~3) up to 92°C of starch samples after thermal modification and after washing are presented in Figure 8 (top, middle, and bottom charts, respectively).

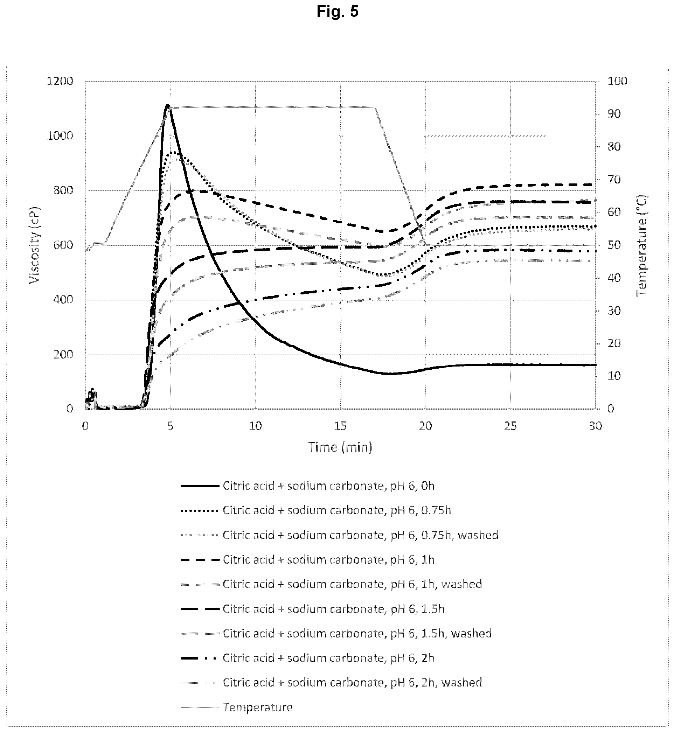

The two starch samples impregnated at pH 6 (citric acid followed by NaOH and citric acid followed by sodium carbonate) had similar pasting properties/curves after thermal modification (Figures 4 and 5).

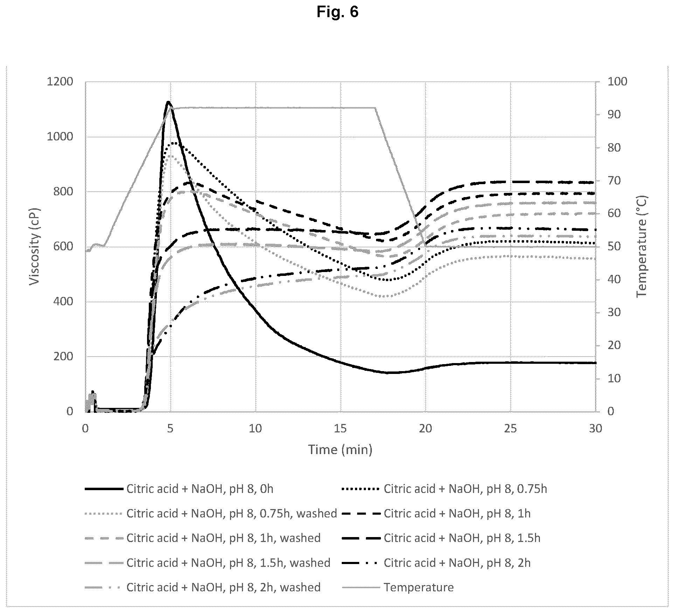

The sample impregnated at pH 8 using citric acid and NaOH had the least acid resistance after thermal modification (Figures 6 and 8), based on its highest overall viscosity, including the peak viscosity, and the largest viscosity drop.

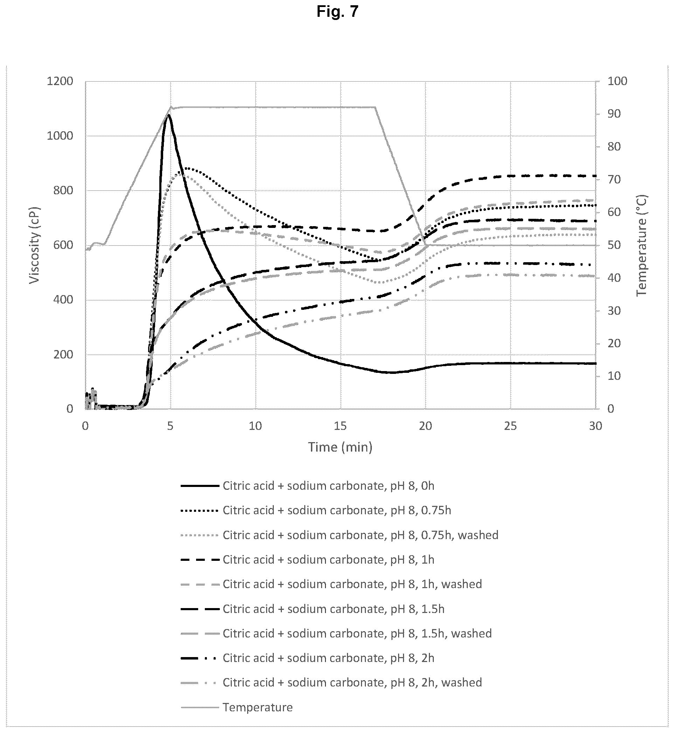

On the other hand, the sample impregnated at pH 8 using citric acid and sodium carbonate showed the strongest acid resistance after thermal modification, based on its lowest overall viscosity and the smallest viscosity drop (Figures 7 and 8).

### Pasting properties in citrate buffer (pH 4) with heating up to 140°C

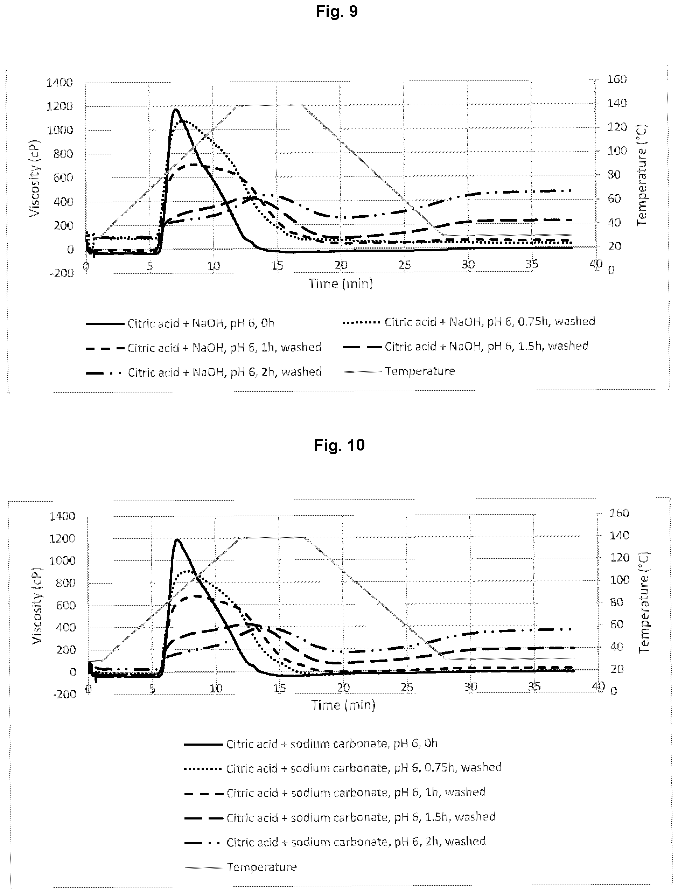

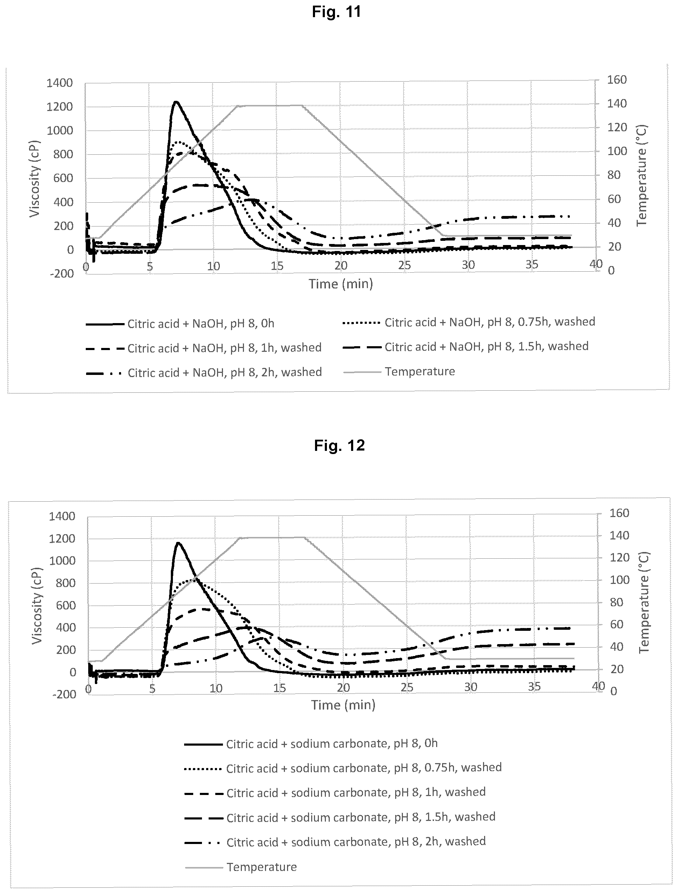

The pasting curves of thermally modified starches (after washing) in citrate buffer (pH 4) up to 140°C are presented in Figures 9, 10, 11, and 12, for the starch samples impregnated at pH 6 using citric acid followed by NaOH, at pH 6 using citric acid followed by sodium carbonate, at pH 8 using citric acid followed by NaOH, and at pH 8 using citric acid followed by sodium carbonate, respectively.

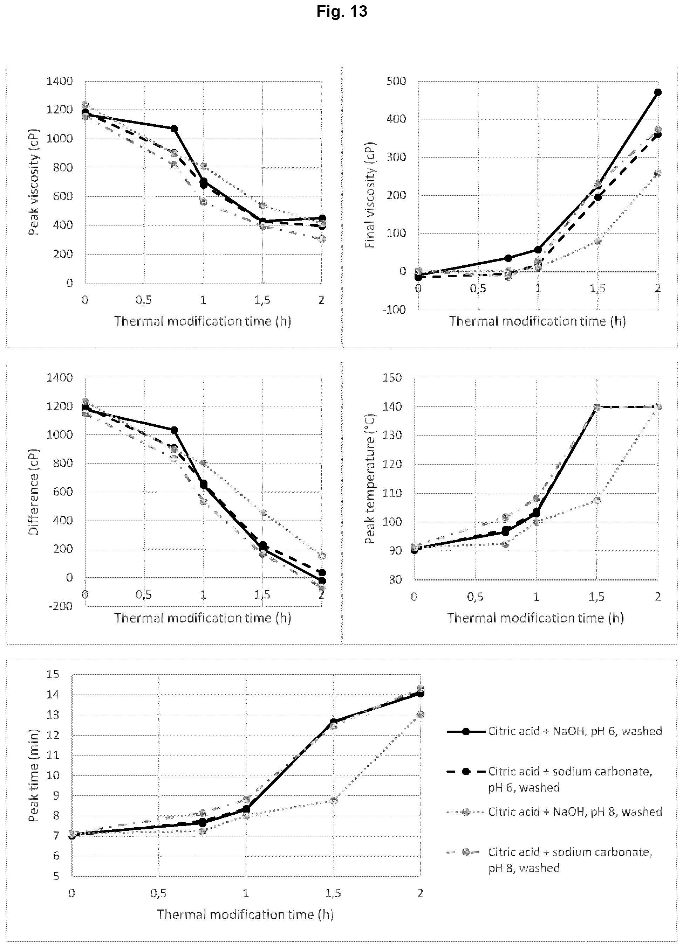

The evolutions of peak viscosity, final viscosity, the difference between peak and final viscosities, peak temperature, and peak time after thermal modification and washing are summarized in Figure 13.

The sample impregnated at pH 6 using citric acid followed by NaOH had the highest overall viscosity after 45-min thermal modification.

However, the sample impregnated at pH 8 using citric acid followed by NaOH had the highest peak viscosity and the lowest final viscosity after 1h thermal modification, giving the largest difference between peak and final viscosities, which is the indication of the weakest acid resistance.

It also has the lowest peak temperature and the peak appears at the shortest time among all samples after thermal modification, exhibiting the least heat resistance.

On the other hand, the sample impregnated at pH 8 using citric acid followed by sodium carbonate had the lowest peak viscosity and the smallest difference between peak and final viscosities after thermal modification. It also showed the highest peak temperature and the largest peak time.

These indicated that the impregnation at pH 8 using citric acid followed by sodium carbonate produced the starch with the highest acid and heat resistance after thermal modification although it has the lowest amount of fixed citrate (Table 5).

### Example 2: Preparation of thermally modified starches from waxy corn starch - pH adjustment to 8 or 11 of the starch slurry with carbonate solution, then pH adjustment to 6 or 8 with citric acid solution.

A starch slurry at 36.5% solid content was prepared using waxy maize starch and demineralized water.

The pH of the slurry was adjusted to 8 or 11 using 10% sodium carbonate, and the mixture was stirred for 30 min.

A citric acid solution (20-30% w/v) was used to adjust the pH to 6 or 8. After 30-min mixing, the impregnated starch was recovered through filtration, and the starch cake was further dried using a fluidized bed dryer (TG200, Retsch) at 60°C until the moisture was about 12% and ground to fine particles.

The pH, the conductivity, and the amounts of sodium carbonate and citric acid added to the starch slurry are summarized in Table 6.

**Table 6. pH, conductivity, and amounts of sodium carbonate and citric acid added to starch slurry in Example 2.**

| Trial | Initial | | Amount of sodium carbonate added* | After adding sodium carbonate | | Amount of citric acid added* | After adding citric acid | |
|---|---|---|---|---|---|---|---|---|
| | pH | Conductivity (µS/cm) | | pH | Conductivity (µS/cm) | | pH | Conductivity (µS/cm) |
| 1 | 5.19 | 173 | 0.06% | 8.00 | Not measured | 0.06% | 6.00 | Not measured |
| 2 | 5.14 | 171 | 1.80% | 11.00 | 4590 | 1.93% | 6.00 | 1930 |
| 3 | 5.17 | 167 | 2.59% | 11.00 | 7730 | 1.52% | 8.00 | 2970 |

| | | | | | | | | |
|---|---|---|---|---|---|---|---|---|
| * Weight percentage of dry sodium carbonate or citric acid to dry starch. | | | | | | | | |

### Thermal modification of impregnated starch

Impregnated starch (35 to 40 g) with about 12% moisture content was placed evenly on an aluminum pan and then heated in a ventilated oven at 170°C for 0 h, 0.75 h, 1 h, 1.5 h, and 2 h.

The pH and the conductivity of thermally modified starch were measured at 20% solid content in demineralized water to monitor the evolution of salt/buffer quantity during thermal modification. The changes in the color of starch powder was also analyzed.

### Washing of thermally modified starch

Thermally modified starch was mixed with demineralized water to create a slurry with 25% solid content. The pH of the slurry was adjusted using NaOH solution or HCl solution to the pH of impregnation if needed.

The starch was recovered by filtration, and the starch cake was further washed with demineralized water and allowed to dry under a fume hood to a moisture between 12 and 14% and ground to fine particles.

The conductivity of washed starch samples measured at 20% solid content in demineralized water was below 100 µS/cm. The color of starch powder after washing was also analyzed.

### pH and conductivity during thermal modification and after washing

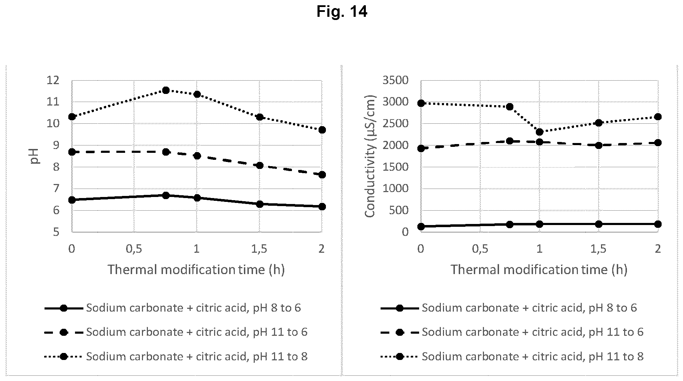

The starch sample impregnated at pH 8 using sodium carbonate followed by the addition of citric acid to pH 6 had a stable pH (between 6 and 7) during thermal modification (Figure 14, left chart).

On the other hand, the samples impregnated at pH 11 using sodium carbonate followed by the addition of citric acid to 6 and 8 showed the increases of the pH to 8.7 and 10.3, respectively, before thermal modification.

For the former, the pH decreased to 7.7 during thermal modification. However, the latter showed an increase in pH to 11.6 after 45-min thermal modification before decreasing to 9.7.

The conductivity of the starch sample impregnated at pH 11 using sodium carbonate followed by the addition of citric acid to 8 was the highest followed by that impregnated at pH 11 using sodium carbonate followed by the addition of citric acid to 6 (Figure 14, right chart).

This was related to the amounts of sodium carbonate and citric acid added to starch slurry during impregnation (Table 6).

The conductivity of the former fluctuated between 2300 and 3000 µS/cm during thermal modification, while that of the latter was quite stable at round 2000 µS/cm.

The starch sample impregnated at pH 8 using sodium carbonate followed by the addition of citric acid to pH 6 did had low conductivity (less than 200 µS/cm) and stayed at the similar level during thermal modification.

### Color of starch powder after thermal modification and after washing.

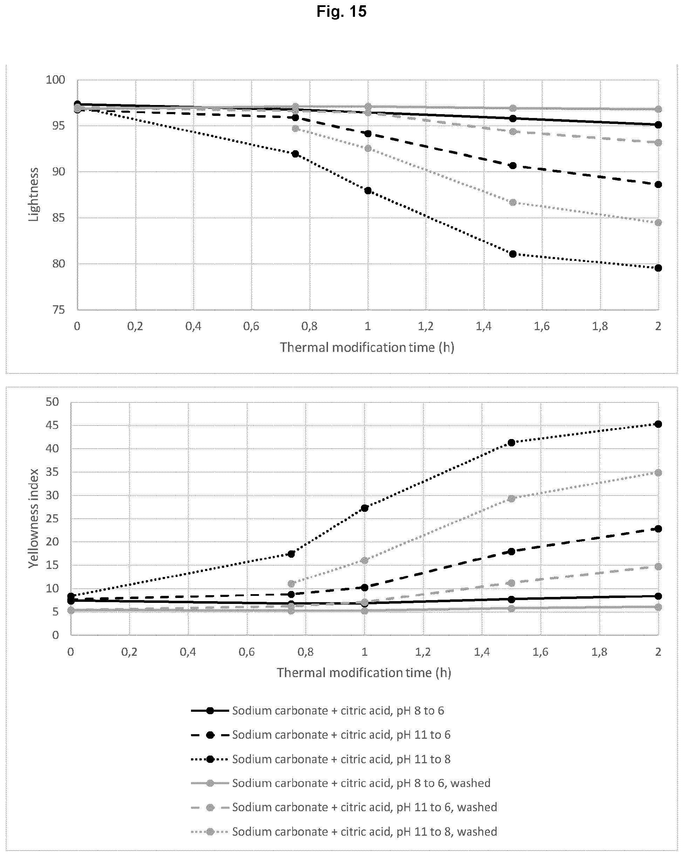

Similar to Example 1, the lightness and the yellowness index of starch samples decreased and increased, respectively, with thermal modification time (Figure 15).

The changes in the lightness and the yellowness were the smallest for the sample impregnated at pH 8 using sodium carbonate followed by the addition of citric acid to pH 6 and the largest for the sample impregnated at pH 11 using sodium carbonate followed by the addition of citric acid to pH 8.

The washing step improved the lightness and decreased the yellowness of all thermally modified starch samples.

### The amounts of free and fixed citrate

**Table 7. Amounts of free and fixed citrate in starch sample before and after thermal modification, respectively.**

| Sample | Impregnation pH | pH before thermal modification | Free citrate before thermal modification* | Fixed citrate after thermal modification* | |
|---|---|---|---|---|---|
| | | | | 1.5h | 2h |
| Sodium carbonate + citric acid | 8 to 6 | 6.48 | 0.02% | 0.01% | 0.01% |
| Sodium carbonate + citric acid | 11 to 6 | 8.69 | 0.93% | 0.08% | 0.11% |
| Sodium carbonate + citric acid | 11 to 8 | 10.32 | 0.71% | 0.02% | 0.04% |

| | | | | | |
|---|---|---|---|---|---|
| * Weight percentage of dry free or fixed citrate to dry starch. | | | | | |

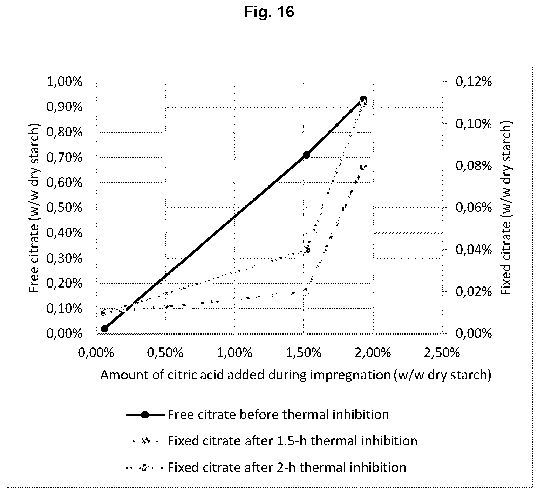

Although the pH changed between after impregnation step and before thermal modification, the amount of free citrate in starch before thermal modification was linearly correlated to the amount of citric acid added during the impregnation step (Table 7 and Figure 16).

The amount of fixed citrate in thermally modified starch also increased with the amount of free citrate in the sample before thermal modification and the amount of citric acid added during the impregnation step, but the relationship was not linear.

The sample impregnated at pH 11 using sodium carbonate followed by the addition of citric acid to pH 8 converted less free citrate to fixed citrate than the sample impregnated at pH 11 using sodium carbonate followed by the addition of citric acid to pH 6 (2.8% vs. 8.6% conversion after 1.5h thermal modification and 5.6% vs. 11.8% conversion after 2h thermal modification, respectively).

### Pasting properties in citric acid solution (pH ~3) with heating up to 92°C

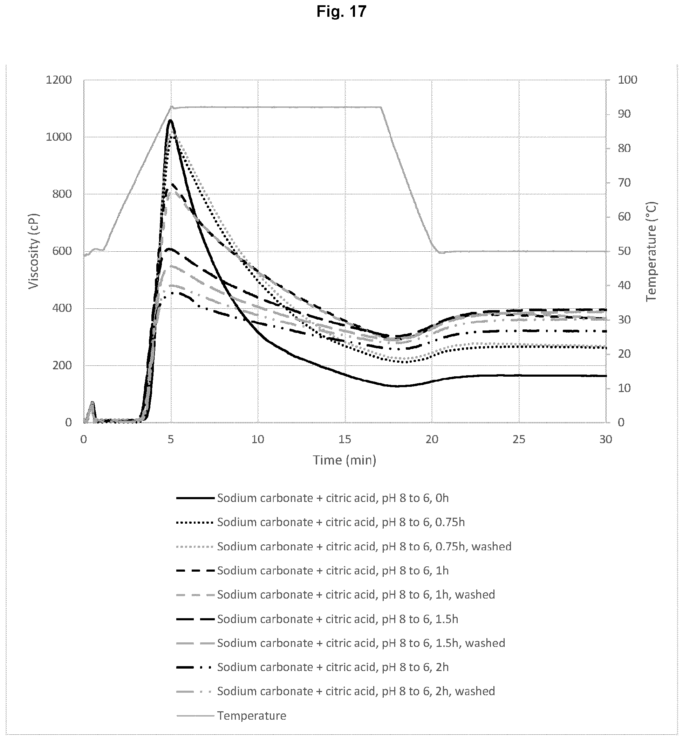

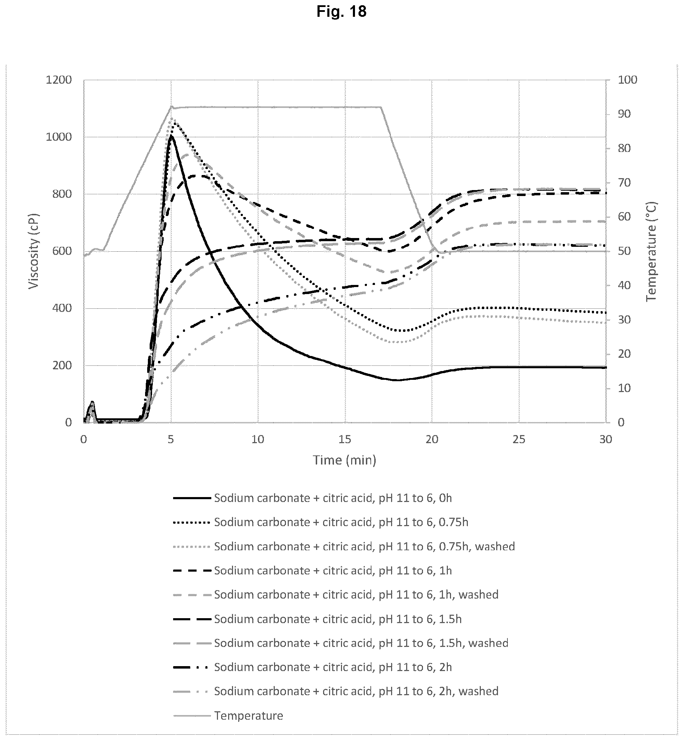

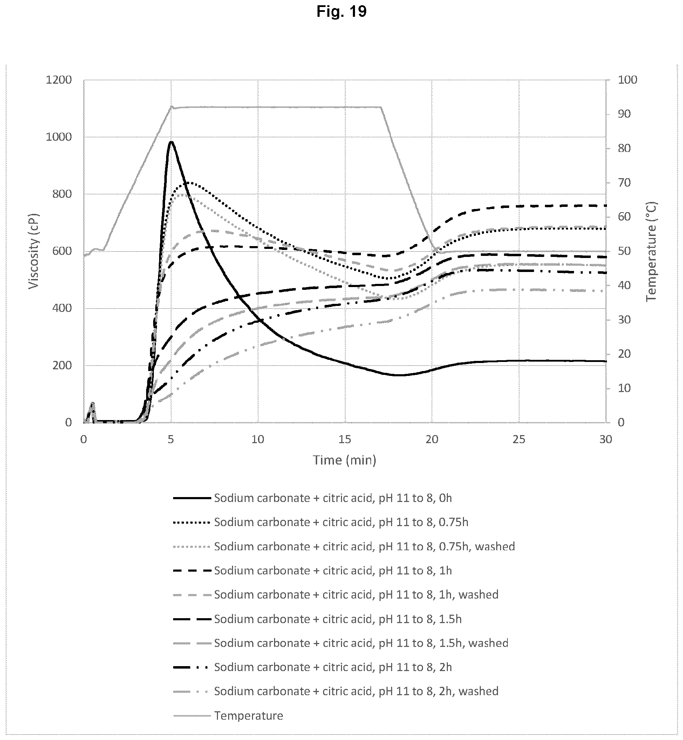

The pasting curves in citric acid solution (pH ~3) heated up to 92°C of the sample impregnated at pH 8 using sodium carbonate followed by the addition of citric acid to pH 6, the sample impregnated at pH 11 using sodium carbonate followed by the addition of citric acid to pH 6, and the sample impregnated at pH 11 using sodium carbonate followed by the addition of citric acid to pH 8 after different thermal modification times are shown in Figures 17, 18, and 19, respectively.

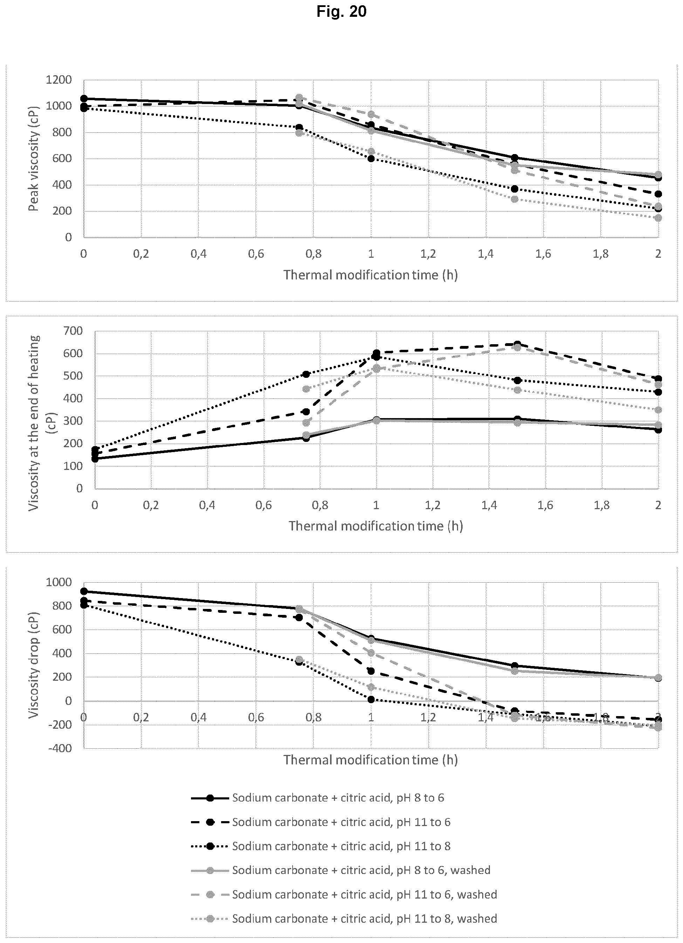

The evolutions of peak viscosity, viscosity at the end of heating, and viscosity drop with the thermal modification time are plotted in Figure 20.

In general, all samples showed a decrease in the peak viscosity and an increase in the viscosity at the end of heating with thermal modification time, indicating improved acid and heat resistance.

Washing step slightly changed the viscosity of the starch samples, but the shape of the pasting curves remained the same.

The presence of peak viscosity was still apparent for the sample impregnated at pH 8 using sodium carbonate followed by the addition of citric acid to pH 6 after 1.5h and 2h thermal modification, while it was not apparent for that impregnated at pH 11 using sodium carbonate followed by the addition of citric acid to pH 6 and that impregnated at pH 11 using sodium carbonate followed by the addition of citric acid to pH 8.

Therefore, the sample impregnated at pH 8 using sodium carbonate followed by the addition of citric acid to pH 6 had the least improvement in the acid and heat resistance after thermal modification.

On the other hand, the sample impregnated at pH 11 using sodium carbonate followed by the addition of citric acid to pH 8 showed the lowest peak viscosity and the smallest viscosity drop after thermal modification, indicating that it had the strongest acid and heat resistance although its amount of fixed citrate was lower than that of the sample impregnated at pH 11 using sodium carbonate followed by the addition of citric acid to pH 6 (Figure 16).

Hence, the acid and heat resistance of thermally modified starch impregnated with both citric acid and sodium carbonate is not related to the amount of fixed citrate on the starch molecules.

### Pasting properties in citrate buffer (pH 4) with heating up to 140°C

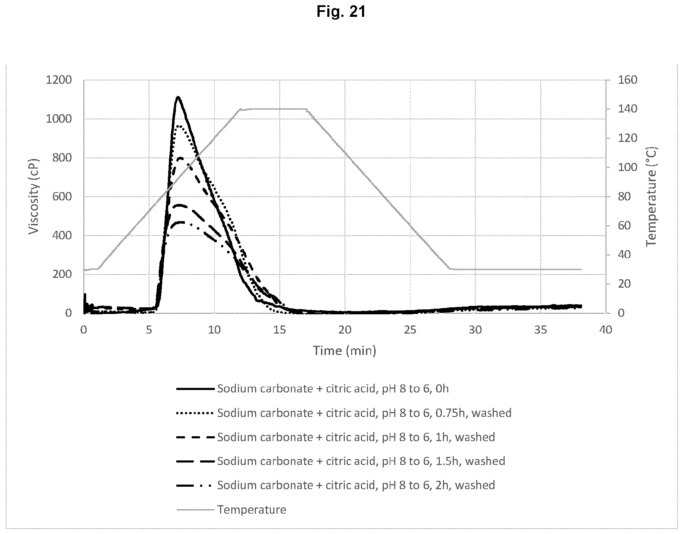

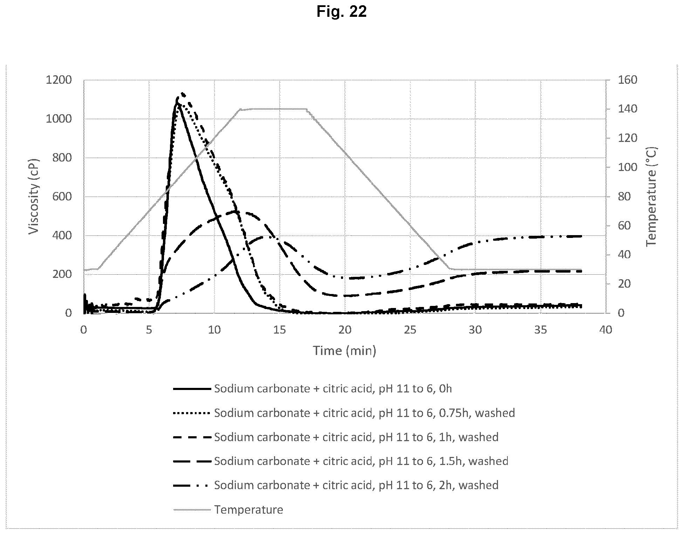

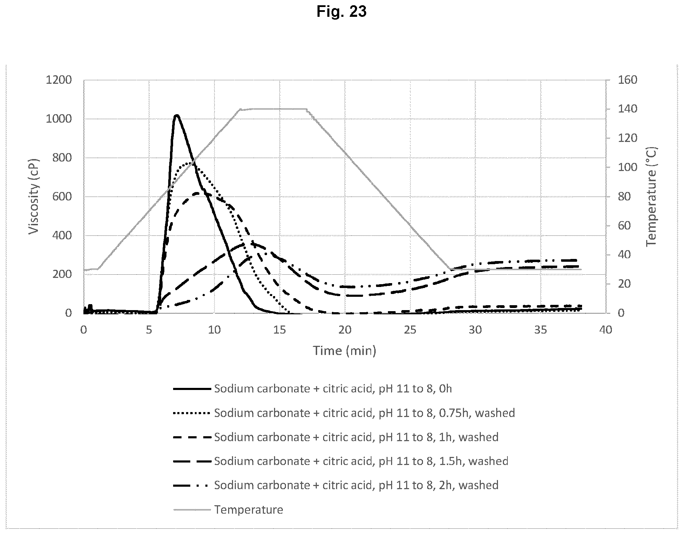

The pasting curves in citrate buffer (pH 4) with heating up to 140°C of the sample impregnated at pH 8 using sodium carbonate followed by the addition of citric acid to pH 6, the sample impregnated at pH 11 using sodium carbonate followed by the addition of citric acid to pH 6, and the sample impregnated at pH 11 using sodium carbonate followed by the addition of citric acid to pH 8 after different thermal modification time are shown in Figures 21, 22, and 23, respectively.

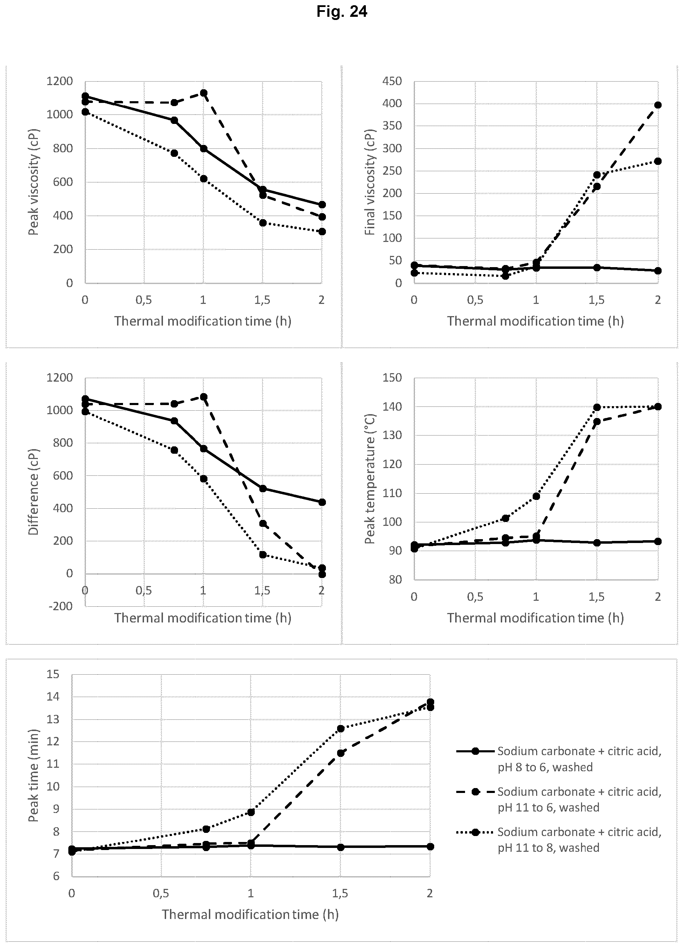

The evolutions of peak viscosity, final viscosity, the difference between peak and final viscosities, peak temperature, and peak time are summarized in Figure 24. The sample impregnated at pH 8 using sodium carbonate followed by the addition of citric acid to pH 6 showed the least acid and heat resistance as the final viscosity was did not change much after thermal modification (remaining at below 50 cP) because the starch was mostly hydrolyzed by acid during heating.

The sample impregnated at pH 11 using sodium carbonate followed by the addition of citric acid to pH 8 showed the lowest peak viscosity, the smallest difference between peak and final viscosities, the highest peak temperature, and the longest time to reach peak viscosity, indicating that it had the strongest acid and heat resistance although its amount of fixed citrate was lower than that of the sample impregnated at pH 11 using sodium carbonate followed by the addition of citric acid to pH 6 (Figure 16).

Hence, the acid and heat resistance of thermally modified starch impregnated with both citric acid and sodium carbonate is not related to the amount of fixed citrate on the starch molecules.

## Claims

1. A method for preparing thermally modified starch, **characterized in that** it comprises the steps consisting of:
(i) preparing a starch milk having a solids content comprised between 30 and 40%, preferably between 35 and 37% by weight,
(ii) adding into the starch slurry both citric acid and sodium carbonate so as to obtain a pH between 6 and 9,
(iii) allowing stabilizing for 15 minutes to 2 hours,
(iv) filtering and drying to an equilibrium moisture content of between 9% and 15%, preferably about 12%,
(v) heating to a temperature between 120 °C and 200°C, preferably between 150°C and 180°C, more preferably between 160°C and 170°C, for a period lasting from 0.5 to 6 hours of reaction time,
(vi) resuspending, correcting the pH, washing and again drying the thermally modified starches thus obtained.

2. The method according to claim 1, **characterized in that** the botanical origin of the starches is selected from the group consisting of corn, waxy corn, high-amylose corn, wheat, waxy wheat, high-amylose wheat, pea, faba bean, mung bean, potato, waxy potato, high-amylose potato, tapioca, waxy tapioca, rice, waxy rice, high-amylose rice, barley, waxy barley, high-amylose barley, sorghum, waxy sorghum, sweet potato, waxy sweet potato, millet, sago, arrowroot, quinoa, amaranth, lotus root, buckwheat, taken alone or in combination, and is more preferentially waxy corn.

3. The method according to claim 1 or 2, **characterized in that** the adding into the starch slurry of both citric acid and sodium carbonate is performed by adding a citric acid solution into the slurry, followed by the adjustment of the pH to between 6 and 9 using a sodium carbonate solution.

4. The method according to claim 1 or 2, **characterized in that** the adding into the starch slurry of both citric acid and sodium carbonate is performed by the adjustment of the pH of the slurry to between 8 and 11 using sodium carbonate, followed by the adjustment of the pH to between 6 and 9 using a citric acid solution.

5. A thermally modified starch produced via method of any previous claims, **characterized in that** it has a fixed citrate content of between 0.01% and 0.16%, preferably between 0.01% and 0.12%, and more preferably between 0.01% and 0.08%.

6. The thermally modified starch according to claim 5, **characterized in that** it has a viscosity drop of less than 400 cP, preferably less than 200 cP, more preferably no viscosity drop, analyzed using RVA at 4.89% starch content in a citrate solution (pH ~3) with a heating program from 50°C to 92°C.

7. The thermally modified starch according to claim 5, **characterized in that** it has a temperature at peak swelling of the starch granules (peak temperature), analyzed using RVA at 4.89% starch content in a citrate buffer (pH ~4) with a heating program from 30°C to 140°C, greater than 100°C, preferably between 110 and 140°C.

8. The thermally modified starch according to claim 5, **characterized in that** it has a difference between peak viscosity and final viscosity of less than 900 cP, preferably less than 600 cP, more preferably less than 300 cP, analyzed using RVA at 4.89% starch content in a citrate buffer (pH ~4) with a heating program from 30°C to 140°C.

9. The thermally modified starch according to claim 1 or 2, **characterized in that** it has a coloring expressed as the L* value of between 75 and 92, preferably between 80 and 90, more preferably between 84 and 88 and/or in the YI value of between 10 and 50, preferably between 20 and 45.

10. A use of the thermally modified starch being produced according to either of claims 1 and 4, or **characterized by** either of claims 5 to 9 as a thickening agent or texturing agent in food applications.

11. The use according to claim 10, as a thickening agent in savory and sauces, and more particularly in ketchup and oyster sauce.
